# EUROPÄISCHE PATENTSCHRIFT

(11) **EP 1 268 043 B1**
(45) Veröffentlichungstag und Bekanntmachung des Hinweises auf die Patenterteilung: **19.11.2003**
(21) Anmeldenummer: 01923689.2
(22) Anmeldetag: 21.03.2001
(51) Int. Cl.: B01D 63/06

(54) **FILTERMODUL**
FILTER MODULE
MODULE DE FILTRAGE

(30) Priorität: 01.04.2000 DE 10026344
(43) Veröffentlichungstag der Anmeldung: 02.01.2003
(73) Patentinhaber: MEMBRAFLOW GMBH & CO. KG Filtersysteme, 73457 Aalen-Essingen (DE)
(72) Erfinder: OLAPINSKI, Hans, 73773 Aichwald (DE); BLÄSE, Dieter, 73557 Mutlangen (DE); FEUERPEIL, Hans-Peter, 73529 Schwäbisch Gmünd (DE)
(74) Vertreter: Dr. Weitzel & Partner
(86) Internationale Anmeldenummer: EP0103203
(87) Internationale Veröffentlichungsnummer: WO01074477

(56) Entgegenhaltungen:
- DE-A- 19 846 041
- DE-A- 19 900 432
- US-A- 4 368 119
- US-A- 4 849 104
- US-A- 5 916 440

## Beschreibung

Die Erfindung betrifft ein Filtermodul gemäß dem Oberbegriff des Anspruches 1.

Filtermodule sind aus der Verfahrenstechnik bekannt. Sie werden vielfältig eingesetzt. insbesonders Filtermodule, die nach dem Membrantrennverfahren arbeiten, dienen beispielsweise in der Aufbereitung von Wasser, in der Meerund Brackwasserentsalzung, in der Lebensmittelindustrie, in der pharmazeutischen Industrie und in der Elektroindustrie dazu, aus einer Flüssigkeit oder einem Gas eine Komponente abzutrennen. Filtermodule, wenn sie nach dem Prinzip der Rohrmodule aufgebaut sind, umfassen eine Anzahl von stabförmigen Filterelementen, die parallel zueinander angeordnet sind. Meist werden Gruppen solcher Filterelemente zusammengefasst und jeweils an den Enden mittels Deckeln in das Modulgehäuse eingespannt. Die Deckel verlaufen dabei senkrecht zu den Stäben und weisen entsprechend der Anzahl der Filterelemente eine Anzahl von Bohrungen auf. Der Innenraum der Filterelemente ist dabei an den Enden gegenüber dem innenraum des Modulgehäuses abgedichtet. Das zu filternde Medium wird in die Filterelemente eingeleitet, dass Permeat durchtritt die Membranschicht der Filterelemente und das Retentat verbleibt im Filterelement oder wird über einen Austritt wieder abgeleitet.

Aufgrund des vielfältigen Einsatzes der Filtermodule werden differierende Anforderungen an die Werkstoffe sowohl der Filterelemente als auch der Modulgehäuseteile beziehungsweise der Deckel gestellt. Häufig ist das Aufbringen einer Oberflächenbeschichtung im Filtermodulgehäuse beziehungsweise an den Deckeln erforderlich, um einerseits die Suspension vor Verunreinigung zu schützen, und andererseits die Gehäuseteile beziehungsweise die Deckel vor Korrosion zu bewahren.

Aufgrund dessen, dass gerade die innenliegenden Oberflächen des Filtermodulgehäuses beschichtet werden müssen, ist das Aufbringen der Beschichtung schwierig und häufig besonders im Bereich der innenliegenden Stirnseiten unzureichend.

Aus der US 4,368,119 ist eine Vorrichtung für die kontinuierliche Behandlung einer Mischung, umfassend eine flüssige Komponente und eine feste aus Partikeln bestehende Komponente bekannt geworden.

Die US 4,849,104 offenbart ein Filtermodul, umfassend ein Modulgehäuse und in dem Modulgehäuse angeordnete Rohrmembranen, wobei das Modulgehäuse einen Grundkörper mit einem Filtratabgang und zwei Stirnseiten aufweist.

Der Erfindung liegt die Aufgabe zugrunde, eine Ausführung eines Filtermoduls anzugeben, bei der das Aufbringen einer Oberflächenbeschichtung einfach und qualitativ hochwertig erfolgen kann. Weiterhin soll durch die Erfindung ein Verfahren geschaffen werden, bei dem das Aufbringen oder die Erneuerung der Oberflächenbeschichtung schnell, kostengünstig und qualitativ hochwertig erfolgt.

Diese Aufgabe wird durch die Merkmale der unabhängigen Ansprüche gelöst.

Um die schlecht zugänglichen Bereiche der zu beschichtenden Oberfläche besonders an den innenliegenden Stirnseiten des Modulgehäuses besser erreichbar zu machen, ist das Filtermodulgehäuse gemäß der Erfindung mit einer oder mehreren Teilfugen, insbesondere einer oder mehrerer Radialteilfugen, ausgeführt.

Das Aufbringen der Beschichtung, vorzugsweise eines oder mehrere der nachfolgenden Materialien Chlorpolyvinylchlorid (CPVC), Polypropylen, Polyvinylidenflourid (PVDF), Hastelloy oder Titan, muss jetzt nicht mehr durch die - entsprechend den Durchmessern der Filterelemente - kleinen Bohrungen an den Stirnseiten des Modulgehäuses erfolgen, sondem kann einfach bei geöffneter Teilfuge durch den deutlich größeren Innendurchmesser des Modulgehäuses geschehen. Besonders vorteilhaft ist das einerseits bei der Beschichtung der innenliegenden Stirnflächen des Modulgehäuses, weil hier die Beschichtung nicht mehr "um die Ecke" erfolgt, sondem sozusagen frontal. Besonders bei langen Modulgehäusen ist eine Ausführung mit mehreren Radialflanschen sinnvoll, damit die zu beschichtenden Oberflächen gut erreichbar sind und nicht zu weit innen liegen.

Natürlich wird durch die erfindungsgemäße Ausführung des Filtermoduls jedwede andere Bearbeitung der Innflächen des Filtermoduls beispielsweise ein Polieren oder Platieren, zum Beispiel mit Platin gegenüber bisher bekannten Verfahren erleichetert beziehungsweise erst ermöglicht.

In einer besonders vorteilhaften Ausführung der Erfindung sind die Modulgehäuseteile im Bereich der Flansche mittels einer Schraubverbindung miteinander verbunden und vorteilhaft zum Beispiel mit einem Dichtring gegen die Umgebung abgedichtet. Auch die Kopfplatten können an das Modulgehäuse angeschraubt und abgedichtet werden.

Um eine Leckage zwischen dem Retentat und dem Permeat am Ende der Filterelemente zu vermeiden, ist es vorteilhaft, die Filterelemente mittels eines Dichtelementes an ihren Enden gegenüber dem Modulgehäuse und gegenüber den Kopfplatten abzudichten.

In einer weiteren Ausgestaltung umfasst die Erfindung ein Verfahren zum Aufbringen einer Beschichtung auf die Oberfläche des Filtermodulgehäuses. Dabei werden die einzelnen Teile des Filtermodulgehäuses vorteilhaft zuerst beschichtet und anschließend zusammengefügt. Das genaue Vorgehen wird im weiteren Verlauf anhand der beigefügten Zeichnungen erläutert.

Die Erfindung soll nachfolgend anhand von zwei Ausführungsbeispielen und den beigefügten Zeichnungen näher erläutert werden. Es zeigen:
- Figur 1: ein Filtermodul in einer Ausführung mit einem Radialflansch.
- Figur 2: einen Ausschnitt des Bereiches eines Filtermoduls am Gehäuseende.

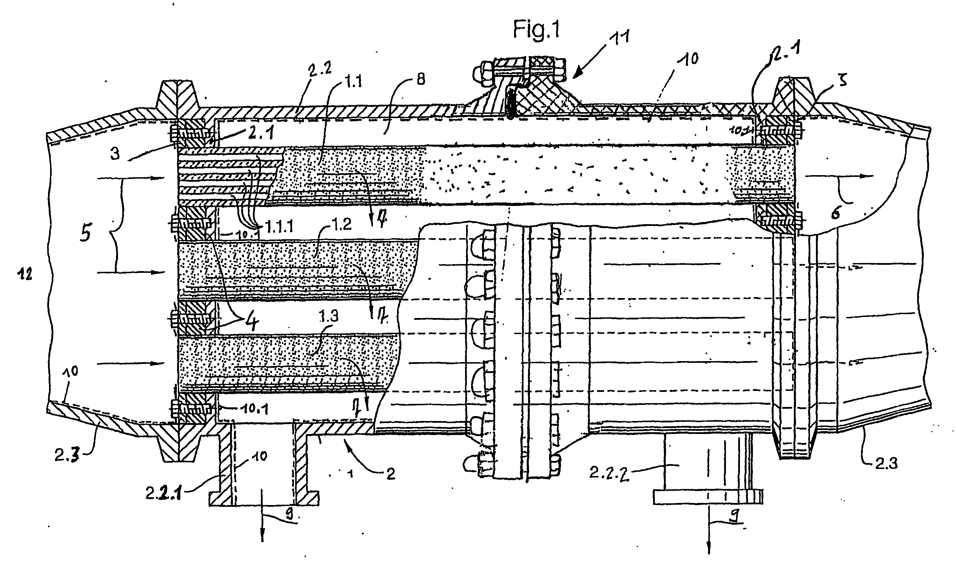

Das in Figur 1 gezeigte Filtermodul umfasst eine Anzahl von Filterelementen 1.1, 1.2, 1.3. Die stabförmigen Filterelemente haben eine zylindrische Gestalt und einen kreisförmigen Querschnitt, wobei jedes Filterelement von einer Mehrzahl von Kanälen 1.1.1 durchzogen ist. Das Filtermodul umfasst ferner ein Gehäuse 2, in dem die Filterelemente 1.1, 1.2, 1.3 parallel angeordnet sind. Die Stirnseiten 2.1 des Gehäuses weisen Bohrungen auf, in die die Filterelemente 1.1, 1.2, 1.3 eingepasst sind. An ihren Enden sind die Filterelemente 1.1, 1.2, 1.3 mittels einer Kopfplatte 3 fixiert und mittels Dichtelementen 4 gegenüber dem innenraum des Filtermodulgehäuses 2 abgedichtet. Der Grundkörper 2.2 des Gehäuses 2 weist einen kreisförmigen Querschnitt auf und umfasst die beiden Filtratabgänge 2.2.1, 2.2.2 und an seinen Enden jeweils ein konisches Anschlussteil 2.3.

Die Kanäle 1.1.1 der Filterelemente 1.1, 1.2, 1.3 werden mit der zu filternden Suspension beschickt - siehe die Pfeile 5. Pfeil 6 veranschaulicht den Austritt der Suspension, des sogenannten Retentats.

Das sogenannte Permeat - Pfeile 7 - tritt durch die Membranen in den Innenraum des Gehäuses 2 ein, der die Filterelemente 1.1, 1.2, 1.3 umgibt und tritt durch die Filtratabgänge 2.2.1 und 2.2.2 wieder aus - Pfeile 9 -.

Die Oberfläche des Filtermodulgehäuses 2 und des Deckels 3 ist beschichtet - hier durch die Linie 10 angedeutet -. Aufgrund einer radialen Teilfuge, die hier in Form eines Radialflansches 11 ausgeführt ist, kann erfindungsgemäß die gesamte Oberfläche 10 einfach und qualitativ hochwertig beschichtet werden, was bei einer Ausführung ohne radialer Teilfuge besonders für die innenliegenden Oberflächen 10.1 der Stirnseiten 2.1 nicht möglich ist.

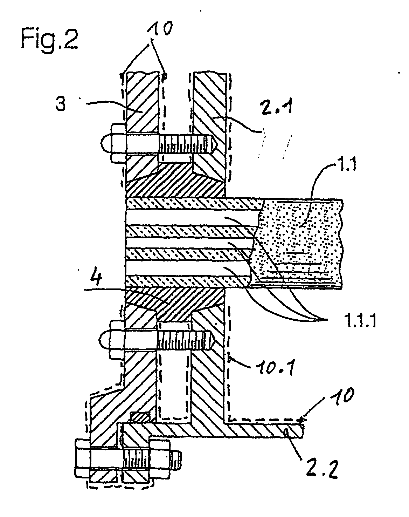

Figur 2 zeigt einen Ausschnitt aus diesem stimseitigen Bereich des Filtermodulgehäuses.

Anhand von Figur 1 soll nachfolgend beispielhaft das Verfahren gemäß Anspruch 15 erläutert werden.

Zunächst werden die Hauptteile 2.2 des Filtermodulgehäuses 2 entlang der strichpunktiert eingezeichneten Linie 10 beschichtet. Dabei kann die Beschichtung vorteilhaft von dem der Stirnseite 2.1 entgegengesetzten Ende durch die Öffnung mit dem Innendurchmesser des Modulgehäusehauptteiles 2.2 erfolgen. Somit ist auch die Beschichtung der Bereiche 10.1 an der Stirnseite 2.1 des Modulgehäuses einfach und qualitativ hochwertig möglich.

Als mögliche Beschichtungsmaterialien können eines oder mehrere der nachfolgenden Materialien Chlorpolyvinylchlorid (CPVC), Polypropylen, Polyvinylidenflourid (PVDF), Hastelloy oder Titan verwandt werden. Sodann werden die Hauptteile 2.2 des Filtermodulgehäuses 2 aneinander montiert, in diesem Ausführungsbeispiel werden die Schraubverbindungen des Flansches 11 fest gezogen.

Anschließend werden die Filterelemente 1.1, 1.2, 1.3 in die zusammengefügten Hauptteile 2.2 des Modulgehäuses 2 so eingefügt, dass ihre Enden auf beiden Seiten über die Stirnseiten 2.1 des Modulgehäuses hinausstehen. Im Anschluss werden die Dichtelemente 4 und die Kopfplatten 3 an den Stirnseiten 2.1 des Modulgehäuses 2 montiert, in diesem Ausführungsbeispiel mittels einer Schraubverbindung.

Dieses Verfahren kann gemäß der Erfindung nicht nur für die Erstmontage der Filtermodule verwendet werden, sondern eignet sich vorzugsweise auch für das Ausbessern von Schäden in der Beschichtungsoberfläche, zum Beispiel durch Abnutzung im Betrieb. Ein weiterer Vorteil ist die gute Inspektionsmöglichkeit der Oberfläche. Weiterhin sind Vorteile der Erfindung darin zu sehen, dass auch die Reinigung des Modulgehäuses erleichtert wird, und auch im Falle von Schäden das Austauschen einzelner Hauptteile (2.2) des Filtermodulgehäuses möglich ist.

## Patentansprüche

1. Filtermodul, umfassend ein Modulgehäuse (2) und mindestens ein Filterelement (1.1);
1.1 das Modulgehäuse (2) weist einen Grundkörper (2.2) mit mindestens einem Filtratabgang (2.2.1, 2.2.2) und zwei Stirnseiten (2.1) auf;
1.2 das mindestens eine Filterelement (1.1) ist in dem Modulgehäuse (2) angeordnet;
1.3 das mindestens eine Filterelement ist als Rohrmembran ausgebildet;
**dadurch gekennzeichnet, dass**
1.4 der Grundkörper (2.2) des Modulgehäuses (2) mehrteilig ausgeführt ist, wobei die einzelnen Teile aneinander montiert sind, so dass mindestens eine Teilfuge gebildet wird und
1.5 die medienführenden Oberflächen des Modulgehäuses (2) beschichtet sind.

2. Filtermodul gemäß Anspruch 1, **dadurch gekennzeichnet, dass** das mindestens eine Filterelement zwischen den beiden Stirnseiten (2.1) des Modulgehäuses (2) angeordnet ist.

3. Filtermodul gemäß einem der Ansprüche 1 oder 2, **dadurch gekennzeichnet, dass** die Teilfuge als Radialteilfuge ausgebildet ist.

4. Filtermodul gemäß Anspruch 3, **dadurch gekennzeichnet, dass** die Teile des Grundkörpers (2.2) mittels eines Radiatflansches (11) miteinander verbunden sind.

5. Filtermodul gemäß Anspruch 4, **dadurch gekennzeichnet, dass** der Innenraum des Modulgehäuses (2) an der Flanschverbindung (11) gegenüber der Umgebung abgedichtet ist.

6. Filtermodul gemäß einem der Ansprüche 4 oder 5, **dadurch gekennzeichnet, dass** die Teile des Grundkörpers (2.2) am Radialflansch (11) mittels einer Schraubverbindung verbunden sind.

7. Filtermodul gemäß einem der Ansprüche 1 bis 6, **dadurch gekennzeichnet, dass** an den axialen Enden des Filtermoduls Kopfplatten (3) angeordnet sind.

8. Filtermodul gemäß Anspruch 7, **dadurch gekennzeichnet, dass** die Kopfplatten (3) mit dem Modulgehäuse (2) flüssigkeits- beziehungsweise gasdicht verbunden sind.

9. Filtermodul gemäß einem der Ansprüche 7 bis 8, **dadurch gekennzeichnet, dass** die Kopfplatten (3) am Modulgehäuse (2) mittels einer Schraubverbindung befestigt sind.

10. Filtermodul gemäß einem der Ansprüche 1 bis 9 , **dadurch gekennzeichnet, dass** die Beschichtung ein oder mehrere der nachfolgenden Materialien Chlorpolyvinylchlorid (CPVC), Polypropylen, Polyvinylidenflourid (PVDF), Hastelloy oder Titan umfasst.

11. Filtermodul gemäß einem der Ansprüche 1 bis 10, **dadurch gekennzeichnet, dass** die mediumführende Oberfläche des Modulgehäuses (2) poliert ist.

12. Filtermodul gemäß einem der Ansprüche 1 bis 11, **dadurch gekennzeichnet, dass** die mediumführende Oberfläche des Modulgehäuses (2) platiert ist, vorzugsweise mit Platin.

13. Filtermodul gemäß einem der Ansprüche 1 bis 12, **dadurch gekennzeichnet, dass** das mindestens eine Filterelement (1.1) achsensymmetrisch im Modulgehäuse (2) angeordnet ist.

14. Filtermodul gemäß einem der Ansprüche 1 bis 13, **dadurch gekennzeichnet, dass** das mindestens eine Filterelement (1.1) an seinen Enden gegen das Modulgehäuse (2) beziehungsweise die Kopfplatte (3) abgedichtet ist.

15. Verfahren zum Aufbringen einer Beschichtung auf die Oberflächen des Modulgehäuses (2) eines Filtermodules gemäß einem der Ansprüche 2 bis 15, **dadurch gekennzeichnet**,
15.1 dass zunächst die Bauteile des Modulgehäuses (2), umfassend einen mindestens zweiteiligen Grundkörper (2.2) und zwei Stirnseiten (2.1) mit Bohrungen zum Durchführen der als Rohrmembran ausgeführten Filterelemente (1.1, 1.2, 1.3) einzeln beschichtet werden;
15.2 danach werden die Bauteile des Modulgehäuses (2), das heißt zumindest die Teile des Grundkörpers (2.2) aneinander befestigt;
15.3 danach wird das wenigstens eine Filterelement (1.1, 1.2, 1.3) derart in das Modulgehäuse (2) eingesetzt, dass das wenigstens eine Filterelement auf beiden Seiten über die Stirnseiten (2.1) des Modulgehäuses (2) hinaussteht;
15.4 danach wird das mindestens eine Filterelement (1.1, 1.2, 1.3) mittels einer Kopfplatte (3) an den Stirnseiten (2.1) des Modulgehäuses (2) fixiert und mittels Dichtelementen (4) gegenüber dem Innenraum des Filtermodulgehäuses (2) abgedichtet.

16. Verfahren gemäß Anspruch 15, **dadurch gekennzeichnet, dass** die Verbindung der Teile des Grundkörpers (2.2) des Modulgehäuses (2) mittels einer Radialflanschverbindung (11) erfolgt.

## Claims

1. Filter module, comprising a module housing (2) and at least one filter element (1.1);
1.1 the module housing (2) has a basic body (2.2) with at least one filtrate discharge (2.2.1, 2.2.2) and two end faces (2.1);
1.2 the at least one filter element (1.1) is arranged in the module housing (2);
1.3 the at least one filter element is designed as a tubular membrane, **characterised in that**
1.4 the basic body (2.2) of the module housing (2) is designed to be multi-part, the individual parts being fitted to one another so at least one partial joint is formed and
1.5 the media-conducting surfaces of the module housing (2) are coated.

2. Filter module according to claim 1, **characterised in that** the at least one filter element is arranged between the two end faces (2.1) of the module housing (2).

3. Filter module according to either of claims 1 or 2, **characterised in that** the partial joint is designed as a partial radial joint.

4. Filter module according to claim 3, **characterised in that** the parts of the basic body (2.2) are connected to one another by means of a radial flange (11).

5. Filter module according to claim 4, **characterised in that** the inner space of the module housing (2) is sealed from the environment at the flange connection (11).

6. Filter module according to either of claims 4 or 5, **characterised in that** the parts of the basic body (2.2) are connected by means of a screw connection at the radial flange (11).

7. Filter module according to any one of claims 1 to 6, **characterised in that** top plates (3) are arranged at the axial ends of the filter module.

8. Filter module according to claim 7, **characterised in that** the top plates (3) are connected to the module housing (2) in a liquid-tight and gas-tight manner.

9. Filter module according to either of claims 7 to 8, **characterised in that** the top plates (3) are fastened to the module housing (2) by means of a screw connection.

10. Filter module according to any one of claims 1 to 9, **characterised in that** the coating comprises one or more of the following materials, chloropolyvinyl chloride (CPVC), polypropylene, polyvinylidene fluoride (PVDF), hastelloy or titanium.

11. Filter module according to any one of claims 1 to 10, **characterised in that** the medium-conducting surface of the module housing (2) is polished.

12. Filter module according to any one of claims 1 to 11, **characterised in that** the medium-conducting surface of the module housing (2) is plated, preferably with platinum.

13. Filter module according to any one of claims 1 to 12, **characterised in that** the at least one filter element (1.1) is arranged axially symmetrically in the module housing (2).

14. Filter module according to any one of claims 1 to 13, **characterised in that** the at least one filter element (1.1) is sealed at its ends from the module housing (2) or the top plate (3).

15. Method for applying a coating to the surfaces of the module housing (2) of a filter module according to any one of claims 2 to 15, **characterised in that**,
15.1 initially the components of the module housing (2), comprising an at least two-part basic body (2.2) and two end faces (2.1) with holes for guiding through the filter elements (1.1, 1.2, 1.3) designed as a tubular membrane are coated individually;
15.2 the components of the module housing (2), in other words at least the parts of the basic body (2.2), are then fastened to one another;
15.3 the at least one filter element (1.1, 1.2, 1.3) is then inserted into the module housing (2) in such a way that the at least one filter element projects over the end faces (2.1) of the module housing (2) on either side;
15.4 the at least one filter element (1.1, 1.2, 1.3) is then fixed to the end faces (2.1) of the module housing (2) by means of a top plate (3) and sealed from the inner space of the filter module housing (2) by means of sealing elements (4).

16. Method according to claim 15, **characterised in that** the parts of the basic body (2.2) of the module housing (2) are connected by means of a radial flange connection (11).

## Revendications

1. Module de filtrage comprenant un boîtier de module (2) et au moins un élément filtrant (1.1) ;
1.1. le boîtier de module (2) présente un corps de base (2.2) avec au moins une sortie de filtrat (2.2.1, 2.2.2) et deux faces frontales (2.1) ;
1.2. le au moins un élément filtrant (1.1) est agencé dans le boîtier de module (2) ;
1.3. le au moins un élément filtrant est conçu sous la forme d'une membrane tubulaire,
**caractérisé en ce que**
1.4. le corps de base (2.2) du boîtier de module (2) est réalisé en plusieurs parties, les différentes parties étant montées les unes avec les autres de manière à former au moins un joint et
1.5. les surfaces du boîtier de module (2) acheminant les fluides, comportent un revêtement.

2. Module de filtrage selon la revendication 1, **caractérisé en ce que** le -au moins un- élément filtrant est agencé entre les deux faces frontales (2.1) du boîtier de module (2).

3. Module de filtrage selon l'une des revendications 1 et 2, **caractérisé en ce que** le joint est conçu comme un joint radial.

4. Module de filtrage selon la revendication 3, **caractérisé en ce que** les parties du corps de base (2.2) sont reliées mutuellement au moyen d'une bride radiale (11).

5. Module de filtrage selon la revendication 4, **caractérisé en ce que** l'espace intérieur du boîtier de module (2) est rendu étanche à l'environnement, au niveau du joint à brides (11).

6. Module de filtrage selon l'une des revendications 4 et 5, **caractérisé en ce que** les parties du corps de base (2.2) sont reliées à la bride radiale (11) au moyen d'une liaison par vis.

7. Module de filtrage selon l'une des revendications 1 à 6, **caractérisé en ce que** des tôles de recouvrement (3) sont agencées aux extrémités axiales du module de filtrage.

8. Module de filtrage selon la revendication 7, **caractérisé en ce que** les tôles de recouvrement (3) sont raccordées au boîtier de module (2), de façon étanche aux liquides et aux gaz.

9. Module de filtrage selon l'une des revendications 7 et 8, **caractérisé en ce que** les tôles de recouvrement (3) sont fixées au boîtier de module (2) au moyen d'une liaison par vis.

10. Module de filtrage selon l'une des revendications 1 à 9, **caractérisé en ce que** la couche de revêtement comprend un ou plusieurs des corps suivants : chlorure de chloropolyvinyle (CPVC), polypropylène, fluorure de polyvinylidène (PVDF), alliage Hastelloy ou titane.

11. Module de filtrage selon l'une des revendications 1 à 10, **caractérisé en ce que** la surface du boîtier de module acheminant le fluide (2) est polie.

12. Module de filtrage selon l'une des revendications 1 à 11, **caractérisé en ce que** la surface du boîtier de module acheminant le fluide (2) est revêtue, avantageusement de platine.

13. Module de filtrage selon l'une des revendications 1 à 12, **caractérisé en ce que** le -au moins un- élément filtrant (1.1) est monté dans le boîtier de module (2) symétriquement à un axe.

14. Module de filtrage selon l'une des revendications 1 à 13, **caractérisé en ce que** le au moins un élément filtrant (1.1) est rendu étanche à ses extrémités envers le boîtier de module (2) et envers la tôle de recouvrement (3).

15. Procédé pour déposer une couche de revêtement sur les surfaces du boîtier de module (2), d'un module de filtrage selon l'une des revendications 2 à 15, **caractérisé en ce que**
15.1 tout d'abord, les éléments du boîtier de module (2) comprenant un corps de base (2.2) en au moins deux parties et deux faces frontales (2.1) avec des alésages destinés au passage des éléments filtrants (1.1, 1.2, 1.3) réalisés sous forme de membrane tubulaire, sont revêtus individuellement ;
15.2 ensuite, les éléments du boîtier de module (2), c'est-à-dire au moins les parties du corps de base (2.2), sont fixés les uns aux autres ;
15.3 ensuite, le -au moins un élément- filtrant (1.1, 1.2, 1.3) est implanté dans le boîtier de module (2), de sorte que le -au moins un- élément filtrant fasse saillie de part et d'autre des faces frontales (2.1) du boîtier de module (2) ;
15.4 ensuite, le -au moins un- élément filtrant (1.1, 1.2, 1.3) est fixé au moyen d'une tôle de recouvrement (3) aux faces frontales (2.1) du boîtier de module (2) et est rendu étanche au moyen d'éléments d'étanchéité (4)par rapport à l'espace intérieur du boîtier de module de filtrage (2).

16. Procédé selon la revendication 15, **caractérisé en ce que** la liaison des parties du corps de base (2.2) du boîtier de module (2) est réalisée au moyen d'une liaison par bride radiale (11).
